# EUROPEAN PATENT SPECIFICATION

(11) **EP 4 132 811 B1**
(45) Date of publication and mention of the grant of the patent: **11.06.2025**
(21) Application number: 21718526.3
(22) Date of filing: 07.04.2021
(51) Int. Cl.: B60K 35/10, B60K 35/28, B60K 35/29

(54) **METHOD OF DISPLAYING INFORMATION AND CORRESPONDING DISPLAY SYSTEM**
VERFAHREN ZUR ANZEIGE VON INFORMATIONEN UND ENTSPRECHENDES ANZEIGESYSTEM
PROCÉDÉ D'AFFICHAGE D'INFORMATIONS ET SYSTÈME D'AFFICHAGE CORRESPONDANT

(30) Priority: 08.04.2020 GB 202005169
(43) Date of publication of application: 15.02.2023
(73) Proprietor: Continental Automotive Technologies GmbH, 30175 Hannover (DE)
(72) Inventor: THANGAM AIYAM PILLAI, Balaji, Singapore 339780 (SG); KINGKAM DURAI, Winnefred Paul Luke, Singapore 339780 (SG)
(74) Representative: Continental Corporation
(86) International application number: PCT/EP2021/058990
(87) International publication number: WO 2021/204832

(56) References cited:
- WO-A1-2017/093716
- US-A1- 2012 242 473
- US-A1- 2018 196 589

## Description

### Field of Invention

This invention relates to display systems in a vehicle and methods of displaying information in a vehicle.

### Background of Invention

The amount of information presented to vehicle operators is ever increasing. Not only does this trend lead to a longer lead time to read and identify the information desired, there are safety concerns as the operator may become distracted.

In addition, personal devices used by the operator or those that are connected to the vehicle's display or other systems may contribute to operator distraction.

Existing solutions to mitigate operator distraction include modifying the presentation of information when the vehicle operator is driving. However, such solutions increase cost and complexity of the vehicle.

In a known solution as disclosed in WO 2017/093716 A1, a driver's level of distraction is increased by greying out portion of displaying zone on a structured display device, so as not to confuse the driver with regard to the information presented, which could further distract the driver as the amount of concentration required increases.

There is therefore a need to provide a vehicle display that overcomes or at least ameliorates one or more of the disadvantages discussed above.

### Summary

It is therefore an object to provide a method of displaying information for a vehicle and a vehicle display system to address the problems discussed above.

To accomplish this and other objects, there is provided, in an aspect, a method of displaying information for a vehicle, according to the subject-matter of claim 1.

In another aspect, there is provided a display system for a vehicle, according to the subject-matter of claim 7.

Advantageously, an operator or driver of the vehicle may choose the mode of display of information as desired. The prior solutions do not provide such customization to each individual.

The second display mode allows information to be displayed only in certain scenarios, that is, upon satisfying a vehicle movement condition. Vehicle movement is a possible indication that the driver is engaged with an activity, i.e**.** moving the vehicle, other than referring to information. Correlating the display of information with vehicle movement may therefore advantageously enhance safety. An increased level of vehicle movement may indicate a higher level of engagement of the driver with moving the vehicle. Displaying information on the display device may be undertaken only upon detection of a decreased level of vehicle movement and/or an absence of vehicle movement. In the second display mode, the information may be displayed upon detection of a decreased level of vehicle movement including an absence of vehicle movement. In the second display mode, the information may be displayed upon detection of an absence of vehicle movement.

The first display mode allows information to be displayed at all times, regardless of vehicle movement. An individual who prefers to view information constantly may choose to select the first display mode.

Information displayed in a vehicle include information viewed by the driver. Information displayed in a vehicle may include typical information displayed on an instrument cluster, such as information related to operation of the vehicle, vehicle movement information, fuel or battery information, information on the state of the vehicle engine or motor, information on gearshift or drive mode, and other similar information. Information displayed in a vehicle may include infotainment information, navigation information, telephone and telematics information, and other such information. Information displayed in a vehicle may include information received from a mobile device or a personal user device communicatively coupled to the vehicle or a system of the vehicle, such as the display device or the display system.

In some embodiments, the first or second display modes may be automatically selected depending on the type of information displayed. In such embodiments, the disclosed display modes may control all types of information displayed in the vehicle. The vehicle or a system of the vehicle, such as the display system, may be configured to automatically provide the control device the selection to display information in a display mode. One of the display modes may be automatically selected by default**,** depending on the design. The information to be displayed in the first display mode or the second display mode may be predetermined and configured into the vehicle or vehicle system. Information that is required to be displayed at all times may be predetermined to be displayed in the first display mode. For example, information related to operating the vehicle may be displayed according to the first display mode, as the driver may need to refer to such information at any time, regardless of vehicle movement. Information that may be needed to be displayed only upon detection of vehicle movement, or information that should be displayed only upon detection of a decreased level of vehicle movement and/or an absence of vehicle movement, may be predetermined to be displayed in the second display mode. Alternatively, information required to be displayed at all times may be excluded or may not be controlled by the disclosed display modes.

In some or additional embodiments, the disclosed display modes may control some types of information displayed in the vehicle. For example, the disclosed display modes may control display of information that is not required to be displayed at all times. In another example, the disclosed display modes may control display of information that may be needed to be displayed only upon detection of vehicle movement, or information that should be displayed only upon detection of a decreased level of vehicle movement and/or an absence of vehicle movement.

Information received from a mobile device or a personal user device that is communicatively coupled to the vehicle or vehicle system may be a specific embodiment of information that can be controlled by the disclosed display modes. Mobile devices or personal user devices, such as personal digital assistants, mobile phones, tablet computers or portable navigation systems, may be connected by a communication protocol to the vehicle or vehicle system. The mobile device or personal user device may be connected by wire or wirelessly to the vehicle or vehicle system. The communication protocol may be wired communication protocols such as USB or wireless communication protocols such as Bluetooth or Wi-Fi. Connected devices often supplement the vehicle with additional functions, such as telephone functions, media functions or navigation functions. The functions of the connected device typically utilize vehicle systems, such as the display system or speaker system of the vehicle. As the functions of the connected device are typically optional to the operation of the vehicle, it may be prudent to display information received from the connected device when a decrease in vehicle movement below a threshold is satisfied.

Navigation information is another specific embodiment of information that may be controlled by the disclosed display modes. The first and second display modes may control the display of navigation information. When a vehicle manoeuvre is required according to turn-by-turn instructions of a navigation application or system, movement of the vehicle, like speed and acceleration, is typically decreased in order to perform the manoeuvre. At this point, it may be useful to display navigation information for the driver to refer to in order to perform the manoeuvre. Hence, when the second display mode is selected, the navigation information may be displayed when a decrease in vehicle movement below a threshold is satisfied. On the other hand, it may be useful to display navigation information all the time when a driver is navigating in an unfamiliar area. Hence, the first display mode may be selected to enable the navigation information to be displayed at all times, regardless of vehicle movement. In another example, navigation information may include the next vehicle manoeuvre as well as future, upcoming vehicle manoeuvres. The next vehicle manoeuvre may be automatically displayed in the first display mode, while the future manoeuvres may be selectable in the first or second display modes.

In some or additional embodiments, the types of information that may be controlled by the disclosed display modes may be dependent on the type of vehicle. It may be more unsafe for a smaller, lighter vehicle, such as a motorcycle, to have the same range of functions during vehicle operation as a larger vehicle, such as a car. Hence, it may be more important to reduce the extent of driver distraction for such smaller, lighter vehicles compared to that of larger vehicles. In a specific embodiment, the vehicle is a two-wheeler. The present disclosure may be advantageous for displaying navigation information on a display device of a two-wheeler. The disclosed display modes may control navigation information displayed on a display device of a two-wheeler.

In some or additional embodiments, the types of information that may be controlled by the disclosed display modes may be dependent on the display device of the vehicle. The disclosed display modes may control information displayed on display devices configured to display information that may potentially block a driver's view of the road. For example, the display device may be a head up display, a display projected on a windshield, or a display projected on a helmet worn by a vehicle user. The disclosed display modes may control information displayed on an instrument cluster, a secondary display or a display of a connected device. In a specific embodiment, the display device is an instrument cluster display. In another specific embodiment, the display device is an instrument cluster display or a speedometer display of a two-wheeler.

Information is displayed, according to the second display mode, upon satisfying a vehicle movement condition. The vehicle movement condition may be a decreased level of vehicle movement or a level of vehicle movement that goes below a threshold. Alternatively, or additionally, the vehicle movement condition may be an absence of vehicle movement. A decreased level of vehicle movement may include a decrease in speed, a decrease in acceleration, or an increase in deceleration. A decreased level of vehicle movement may be detected by the application of brakes. In some embodiments, it may be useful to display information only upon an absence of vehicle movement, such as when the vehicle speed is zero. In some embodiments, the vehicle movement condition may comprise at least one of dropping below a speed threshold, dropping below an acceleration threshold, or applying brakes. In an embodiment, the vehicle movement condition may be the vehicle speed dropping below a speed threshold. In another embodiment, the vehicle movement condition may be the vehicle speed dropping below a speed threshold and acceleration of the vehicle is zero or negative. The vehicle movement condition or combinations of conditions are not particularly limited and may depend on the vehicle or the design. The thresholds are not particularly limited and may depend on the vehicle or the design. The vehicle movement data obtained may therefore be at least one of speed, acceleration, or braking. Vehicle movement may be obtained from any suitable measurement or detection device that is available in the vehicle or coupled with the vehicle to implement the present disclosure. The measurement or data may be transmitted to the display system or display device for determination whether the vehicle movement condition has been satisfied. For example, speed may be measured by the speedometer of the vehicle and the speed data may be transmitted to the display device for determination whether the vehicle movement condition has been satisfied.

In some embodiments, the selection of the desired display mode may be made through an input device. The control device may be an input device. The input device may receive the selection of the desired display mode. The control or input device may receive input from a user, such as the driver, to select the desired display mode. The selection may be made by actuating a button or dial or switch. Where the display device is a human machine interface, such as a touchscreen display, the selection may be made by touching a virtual button displayed on the display device. Upon receiving the selection of the desired display mode, the control or input device may cause the vehicle or vehicle system, such as the display system, to control the display of information on the display device. The vehicle system may instruct a presentation layer of the system, such as a display server, and/or other components of the system in order to output or not output the information to be displayed on the display device. As a result, the vehicle system may display information on the display device according to the selected display mode. The actions of the vehicle or vehicle system described herein may be configured by a set of instructions stored in its memory. The instructions may be part of an application layer of the system. The instructions may be executed by a processor of the vehicle system.

In other embodiments, as mentioned above, the selection of the desired display mode may be automatically made by the vehicle or vehicle system and received by the control device. The selection of the desired display mode may be configured by a set of instructions stored in memory of the vehicle or vehicle system, such as the display system. Instructions may be executed by a processor of the vehicle system. The desired display mode may be selected according to the instructions. In such embodiments, the control device may be a set of instructions stored in the memory of the vehicle or vehicle system. The control device may be configured to receive the selection and control the display of information on the display device. The control device may instruct a presentation layer of the system, such as a display server, and/or other components of the system in order to output or not output the information to be displayed on the display device. The actions of the vehicle system or control device described herein may be configured by instructions stored in memory of the system. The instructions may be part of an application layer of the system.

The vehicle system disclosed herein, e.g. the display system, may be an electronic control unit of the vehicle. The display system may be any control unit comprising a display device. The display system may be an instrument cluster ECU comprising a speedometer display. The display system may be an ECU in the central stack, such as an infotainment and/or navigation system. The display system may be an integrated cluster and infotainment ECU. The display system may be a head up display ECU. Vehicle systems may be computing devices comprising processor (s), such as central processing units, graphics processors and image processors, and computer-readable storage media or memory. The disclosed display system may be configured to execute the disclosed method. The disclosed method may be computer-readable instructions stored in non-transitory memory of the disclosed display system, executable by a processor of the system.

### Brief Description of Drawings

Fig. 1 shows an illustration of a flowchart of a method 100 of displaying information for a motorcycle, according to an embodiment of the invention.
Fig. 2 shows an illustration of a display device 210 of a motorcycle, according to an embodiment of the invention.
Fig. 3 shows an illustration of a display system 200 for a motorcycle, according to an embodiment of the invention.

In the figures, like numerals denote like parts. Detailed Description

In embodiments, there is provided a method of displaying information for a vehicle. The method comprises: receiving, from a control device, a selection to display information on a display device of the vehicle in a first display mode or a second display mode; obtaining vehicle movement data; and displaying information on the display device according to the selected display mode. In the first display mode, the information is displayed regardless of vehicle movement. In the second display mode, the information is displayed upon satisfying a vehicle movement condition based on the vehicle movement data.

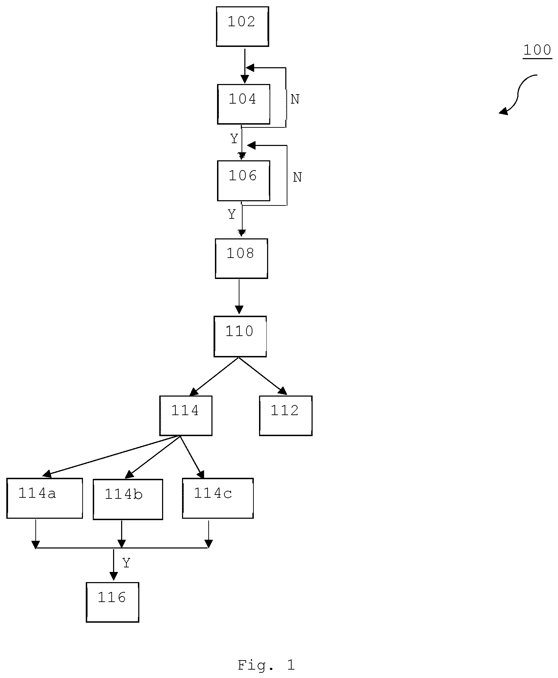

Fig. 1 illustrates a flowchart of a method 100 of displaying information for a motorcycle, according to an embodiment of the invention. The method 100 is executed by an instrument cluster display system of the motorcycle.

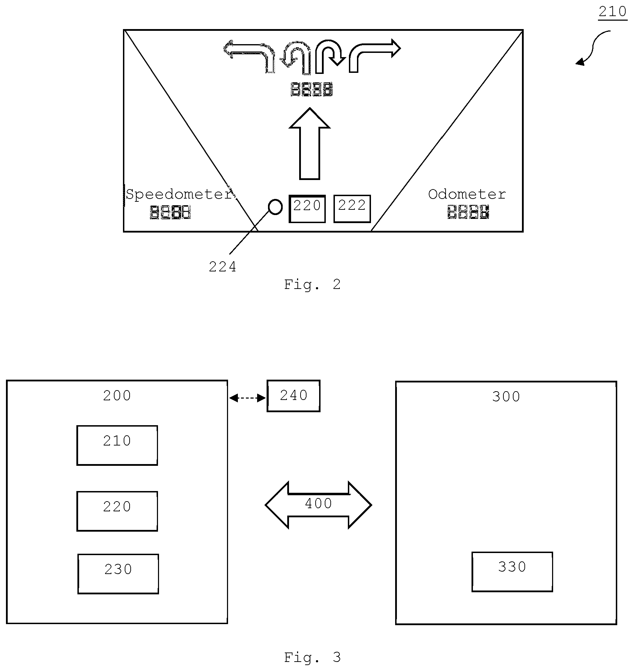

The method 100 starts with booting up the display system upon receiving input through a communication bus that the ignition of the motorcycle is switched on (step 102) . In step 104, the display system checks whether a mobile device is connected to it. If there is no confirmation that a mobile device is connected in step 104, the process continues checking whether a mobile device is connected to the display system. The checking may be done either at a regular time interval or when an event occurs, e.g**.** when a connection is detected or when a button (222 in Fig. 2) is selected to enable the display system to receive communication from a mobile device connected either by wire or wirelessly. If a personal digital assistant (PDA) is communicatively coupled to the display system, the display system confirms that the PDA is connected in step 104.

In step 106, the PDA is synchronized with the display system. an application, for example a navigation application, running on the PDA is synchronized with the display system. If the synchronization is not successful, the process continues trying to synchronize the PDA and the display system. Once the synchronization of the PDA and display system is successful, the LCD display screen mirrors what is displaying on the PDA in step 106. An indication may be provided on the LCD display screen to indicate whether synchronization is successful or not. The indication may be in the form of an LED light (224 in Fig. 2). If synchronization is successful, the LED light may be configured to glow constantly. Otherwise, the LED light may be configured to glow discontinuously.

In step 108, the display system checks whether a selection has been received to run an application, for example a navigation application, that is available on the PDA. The selection can be made through the touchscreen of the LCD display screen. An indication (not shown in the figures), e.g. in the form of an LED light, may also be provided on the LCD display screen to indicate whether an application is running on the connected device and/or whether a selection has been received to run the application on the display system.

After a selection has been made to run an application on the display system, in step 110, the display system checks whether a selection has been received to display the running application on the LCD display screen of the motorcycle, in a first display mode or a second display mode. This selection can be made through a button (220 in Fig. 2) located on the LCD display screen. The button may enable toggling between display modes. Alternatively, selecting the button may activate one of the display modes; in other words, the other display mode is automatically selected by the display system by default.

In any case, if the first display mode is selected, the application running on the connected PDA is displayed on the LCD display screen, regardless of vehicle movement (step 112).

If the second display mode is selected, the application running on the connected PDA is displayed upon satisfying a vehicle movement condition (step 114). In this case, there are three vehicle movement conditions to meet: detecting whether the motorcycle's brakes have been applied (114a); detecting whether the motorcycle's speed is less than 30 km/h (114b) ; and detecting whether the motorcycle is not accelerating, i.e. acceleration is zero or negative (114c) . Therefore, method 100 includes obtaining speed data; acceleration data; and data showing whether brakes have been applied. If any of the three conditions is not satisfied, the LCD display screen of the motorcycle does not display information received from the PDA. If all three conditions are satisfied, the application running on the connected PDA is displayed on the LCD display screen (step 116).

In embodiments, there is also provided a display system for a vehicle. The system comprises: a display device; and a control device configured to receive a selection to display information on the display device in a first display mode or a second display mode. The display device is configured to display information according to the selected display mode. In the first display mode, the information is displayed regardless of vehicle movement. In the second display mode, the information is displayed upon satisfying a vehicle movement condition based on vehicle movement data received by the display device.

Fig. 2 shows an illustration of a display device 210 of a motorcycle, according to an embodiment of the invention. The display device 210 is an LCD display screen of an instrument cluster display system of the motorcycle. Specifically, the display device 210 is an alpha numeric graphical LCD display, which functions as a human machine interface that is touchscreen-enabled. Button 220 is provided as part of display device 210 to allow a user to select whether to display information on the display device 210 in a first display mode or a second display mode.

Fig. 3 shows an illustration of a display system 200 for a motorcycle, according to an embodiment of the invention. The display system 200 comprises: display device 210 according to the embodiment of Fig. 2; and a control device 220 configured to receive a selection to display information on the display device in a first display mode or a second display mode, according to the embodiment of Fig. 2. The display device 210 is configured to display information according to the selected display mode. In the first display mode, the information is displayed regardless of vehicle movement. In the second display mode, the information is displayed upon satisfying a vehicle movement condition based on vehicle movement data received by the display device 210. The display system 200 is communicatively coupled with a mobile device 300, such as a personal digital assistant (PDA) according to the embodiment of Fig. 1. The first and second display modes control the display of information received from the connected device 300. The display system 200 may be configured to execute the method 100. The display system 200 and the mobile device 300 can be connected by a wired or wireless communication protocol 400. To enable the communicative coupling, display system 200 comprises a communication module 230 and mobile device 300 also comprises a communication module 330.

The display system 200 may also be connected to external modules 240, such as an LED light. The LED light may be used to indicate whether an application is running on the connected device 300 and/or whether a selection has been received to run and display the application on the display system 200.

## Claims

1. A method (100) of displaying information for a vehicle, the method comprising:
receiving (110), from a control device, a selection to display information on a display device of the vehicle in a first display mode or a second display mode;
obtaining vehicle movement data;
displaying information on the display device according to the selected display mode (112, 116);
**characterised in that**
in the first display mode, the information is displayed regardless of vehicle movement, and in the second display mode, the information is displayed upon satisfying a vehicle movement condition based on the vehicle movement, and
the vehicle movement condition comprises at least one dropping below a speed threshold, dropping below an acceleration threshold, or applying brakes to a two-wheeler.

2. The method (100) of claim 1, further comprising: communicatively coupling (104) a mobile device to the display device,
wherein the first and second display modes control the display of information received from the mobile device.

3. The method (100) of claim 1 or 2, wherein the first and second display modes control the display of navigation information.

4. The method (100) of any preceding claim, wherein the vehicle movement data obtained is at least one of speed, acceleration, or braking.

5. The method (100) of any preceding claim, wherein the vehicle is a two-wheeler.

6. The method (100) of any preceding claim, wherein the display device is an instrument cluster display.

7. A display system (200) for a vehicle, the system comprising:
a display device (210);
a control device (220) configured to receive a selection to display information on the display device (210) in a first display mode or a second display mode;
wherein the display device (210) is configured to display information according to the selected display mode,
**characterised in that**
in the first display mode, the information is displayed regardless of vehicle movement, and in the second display mode, the information is displayed upon satisfying a vehicle movement condition based on vehicle movement data obtained by the display device (210), and
the vehicle movement condition comprises at least one of dropping below a speed threshold, dropping below an acceleration threshold, or applying brakes of a two-wheeler.

8. The system (200) of claim 7, wherein the first and second display modes control the display of information received from a mobile device (300) that is communicatively coupled to the display device (200) of the vehicle.

9. The system (200) of claim 7 or 8, wherein the first and second display modes control the display of navigation information.

10. The system (200) of any one of claims 7-9, wherein the vehicle movement data obtained is at least one of speed, acceleration, or braking.

11. The system (200) of any one of claims 7-10, wherein the vehicle movement condition comprises at least one of dropping below a speed threshold, dropping below an acceleration threshold, or applying brakes.

12. The system (200) of any one of claims 7-11, wherein the vehicle is a two-wheeler.

13. The system (200) of any one of claims 7-12, wherein the display device (210) is an instrument cluster display.

## Patentansprüche

1. Verfahren (100) zum Anzeigen von Informationen für ein Fahrzeug, wobei das Verfahren Folgendes umfasst:
Empfangen (110), von einer Steuervorrichtung, einer Auswahl zum Anzeigen von Informationen auf einer Anzeigevorrichtung des Fahrzeugs in einem ersten Anzeigemodus oder einem zweiten Anzeigemodus;
Erhalten von Fahrzeugbewegungsdaten;
Anzeigen von Informationen auf der Anzeigevorrichtung gemäß dem ausgewählten Anzeigemodus (112, 116);
**dadurch gekennzeichnet, dass**
in dem ersten Anzeigemodus die Informationen unabhängig von der Fahrzeugbewegung angezeigt werden, und in dem zweiten Anzeigemodus die Informationen angezeigt werden, wenn eine auf der Fahrzeugbewegung basierende Fahrzeugbewegungsbedingung erfüllt wird, und
die Fahrzeugbewegungsbedingung mindestens eines von Abfallen unter eine Geschwindigkeitsschwelle, Abfallen unter eine Beschleunigungsschwelle oder Betätigen von Bremsen an einem Zweirad umfasst.

2. Verfahren (100) nach Anspruch 1, das ferner Folgendes umfasst:
kommunikatives Koppeln (104) einer mobilen Vorrichtung mit der Anzeigevorrichtung,
wobei der erste und der zweite Anzeigemodus die Anzeige von Informationen steuern, die von der mobilen Vorrichtung empfangen werden.

3. Verfahren (100) nach Anspruch 1 oder 2, wobei der erste und der zweite Anzeigemodus die Anzeige von Navigationsinformationen steuern.

4. Verfahren (100) nach einem der vorhergehenden Ansprüche, wobei die erhaltenen Fahrzeugbewegungsdaten mindestens eines einer Geschwindigkeit, einer Beschleunigung oder einer Bremsung sind.

5. Verfahren (100) nach einem der vorhergehenden Ansprüche, wobei das Fahrzeug ein Zweirad ist.

6. Verfahren (100) nach einem der vorhergehenden Ansprüche, wobei die Anzeigevorrichtung eine Kombiinstrumentanzeige ist.

7. Anzeigesystem (200) für ein Fahrzeug, wobei das System Folgendes umfasst:
eine Anzeigevorrichtung (210);
eine Steuervorrichtung (220), die dazu ausgelegt ist, eine Auswahl zum Anzeigen von Informationen auf der Anzeigevorrichtung (210) in einem ersten Anzeigemodus oder einem zweiten Anzeigemodus zu empfangen;
wobei die Anzeigevorrichtung (210) dazu ausgelegt ist, Informationen gemäß dem ausgewählten Anzeigemodus anzuzeigen,
**dadurch gekennzeichnet, dass**
in dem ersten Anzeigemodus die Informationen unabhängig von einer Fahrzeugbewegung angezeigt werden, und in dem zweiten Anzeigemodus die Informationen angezeigt werden, wenn eine Fahrzeugbewegungsbedingung erfüllt wird, die auf Fahrzeugbewegungsdaten basiert, die durch die Anzeigevorrichtung (210) erhalten werden, und
die Fahrzeugbewegungsbedingung mindestens eines von Abfallen unter eine Geschwindigkeitsschwelle, Abfallen unter eine Beschleunigungsschwelle oder Betätigen von Bremsen eines Zweirads umfasst.

8. System (200) nach Anspruch 7, wobei der erste und der zweite Anzeigemodus die Anzeige von Informationen steuern, die von einer mobilen Vorrichtung (300) empfangen werden, die kommunikativ mit der Anzeigevorrichtung (200) des Fahrzeugs gekoppelt ist.

9. System (200) nach Anspruch 7 oder 8, wobei der erste und der zweite Anzeigemodus die Anzeige von Navigationsinformationen steuern.

10. System (200) nach einem der Ansprüche 7-9, wobei die erhaltenen Fahrzeugbewegungsdaten mindestens eines einer Geschwindigkeit, einer Beschleunigung oder einer Bremsung sind.

11. System (200) nach einem der Ansprüche 7-10, wobei die Fahrzeugbewegungsbedingung mindestens eines von Abfallen unter eine Geschwindigkeitsschwelle, Abfallen unter eine Beschleunigungsschwelle oder Betätigen von Bremsen umfasst.

12. System (200) nach einem der Ansprüche 7-11, wobei das Fahrzeug ein Zweirad ist.

13. System (200) nach einem der Ansprüche 7-12, wobei die Anzeigevorrichtung (210) eine Kombiinstrumentanzeige ist.

## Revendications

1. Procédé (100) d'affichage d'informations pour un véhicule, le procédé comprenant :
la réception (110), en provenance d'un dispositif de commande, d'une sélection pour afficher des informations sur un dispositif d'affichage du véhicule dans un premier mode d'affichage ou un second mode d'affichage ;
l'obtention de données de mouvement de véhicule ;
l'affichage d'informations sur le dispositif d'affichage selon le mode d'affichage sélectionné (112, 116) ;
**caractérisé en ce que**
dans le premier mode d'affichage, les informations sont affichées indépendamment d'un mouvement de véhicule, et dans le second mode d'affichage, les informations sont affichées dès le respect d'une condition de mouvement de véhicule sur la base du mouvement de véhicule, et
la condition de mouvement de véhicule comprend au moins une baisse en dessous d'un seuil de vitesse, une baisse en dessous d'un seuil d'accélération, ou une application de freins sur un deux-roues.

2. Procédé (100) de la revendication 1, comprenant en outre : le couplage en communication (104) d'un dispositif mobile au dispositif d'affichage,
dans lequel les premier et second modes d'affichage commandent l'affichage d'informations reçues en provenance du dispositif mobile.

3. Procédé (100) de la revendication 1 ou 2, dans lequel les premier et second modes d'affichage commandent l'affichage d'informations de navigation.

4. Procédé (100) d'une quelconque revendication précédente, dans lequel les données de mouvement de véhicule obtenues sont au moins un parmi la vitesse, l'accélération, ou le freinage.

5. Procédé (100) d'une quelconque revendication précédente, dans lequel le véhicule est un deux-roues.

6. Procédé (100) d'une quelconque revendication précédente, dans lequel le dispositif d'affichage est un affichage de grappe d'instruments.

7. Système d'affichage (200) pour un véhicule, le système comprenant :
un dispositif d'affichage (210) ;
un dispositif de commande (220) configuré pour recevoir une sélection pour afficher des informations sur le dispositif d'affichage (210) dans un premier mode d'affichage ou un second mode d'affichage ;
dans lequel le dispositif d'affichage (210) est configuré pour afficher des informations selon le mode d'affichage sélectionné,
**caractérisé en ce que**
dans le premier mode d'affichage, les informations sont affichées indépendamment d'un mouvement de véhicule, et dans le second mode d'affichage, les informations sont affichées dès le respect d'une condition de mouvement de véhicule sur la base de données de mouvement de véhicule obtenues par le dispositif d'affichage (210), et
la condition de mouvement de véhicule comprend au moins une parmi une baisse en dessous d'un seuil de vitesse, une baisse en dessous d'un seuil d'accélération, ou une application de freins d'un deux-roues.

8. Système (200) de la revendication 7, dans lequel les premier et second modes d'affichage commandent l'affichage d'informations reçues en provenance d'un dispositif mobile (300) qui est couplé en communication au dispositif d'affichage (200) du véhicule.

9. Système (200) de la revendication 7 ou 8, dans lequel les premier et second modes d'affichage commandent l'affichage d'informations de navigation.

10. Système (200) de l'une quelconque des revendications 7 à 9, dans lequel les données de mouvement de véhicule obtenues sont au moins un parmi la vitesse, l'accélération, ou le freinage.

11. Système (200) de l'une quelconque des revendications 7 à 10, dans lequel la condition de mouvement de véhicule comprend au moins une parmi une baisse en dessous d'un seuil de vitesse, une baisse en dessous d'un seuil d'accélération, ou une application de freins.

12. Système (200) de l'une quelconque des revendications 7 à 11, dans lequel le véhicule est un deux-roues.

13. Système (200) de l'une quelconque des revendications 7 à 12, dans lequel le dispositif d'affichage (210) est un affichage de grappe d'instruments.
